# EUROPÄISCHE PATENTSCHRIFT

(11) **EP 2 698 473 B1**
(45) Veröffentlichungstag und Bekanntmachung des Hinweises auf die Patenterteilung: **03.07.2019**
(21) Anmeldenummer: 13004039.7
(22) Anmeldetag: 13.08.2013
(51) Int. Cl.: E01C 19/23

(54) **Strassenbaumaschine**
Road construction machine
Machine de construction de routes

(30) Priorität: 13.08.2012 DE 102012016035
(43) Veröffentlichungstag der Anmeldung: 19.02.2014
(73) Patentinhaber: BOMAG GmbH, 56154 Boppard (DE)
(72) Erfinder: Kreutz, Tobias, 55497 Ellern (DE)
(74) Vertreter: Lang, Friedrich

(56) Entgegenhaltungen:
- DE-A1-102007 040 292
- US-B1- 6 988 305
- "HD SERIE", FIRMENPROSPEKT, 2004, XP002763875, Tirschenreuth

## Beschreibung

Die Erfindung betrifft eine selbstfahrende Straßenbaumaschine, beispielsweise eine Straßenwalze, mit einer lichttechnischen Anlage an der Frontseite und/oder der Heckseite. Die Erfindung betrifft ferner eine als Straßenwalze ausgebildete Straßenbaumaschine mit einem Vorderwagen und einem Hinterwagen, die über ein Pendel-/Knickgelenk miteinander verbunden sind, wobei auf dem Vorderwagen oder dem Hinterwagen eine Fahrerkabine angeordnet ist, wobei der Vorderwagen zwei seitliche Tragelemente aufweist, an welchen zwei Stützen für die vordere Bandage angebracht sind, wobei der Vorderwagen ferner zwischen den beiden Tragelementen vor der Fahrerkabine zur Frontseite der Straßenwalze hin eine nach unten abfallende Abschrägung aufweist, und wobei zwischen den beiden Tragelementen und oberhalb der Abschrägung eine Traverse verläuft, an welcher lichttechnische Einrichtungen angeordnet sind.

Bei bekannten selbstfahrenden Baumaschinen sind die lichttechnischen Anlagen in eine Fahrzeugverkleidung integriert, oder auf der Fahrzeugverkleidung oder auf Rahmenteilen des Fahrzeuges angeordnet. Zu den selbstfahrenden Baumaschinen gehören Straßenwalzen, die im Verkehrswegebau eingesetzt werden. Durch die Abschrägung des Vorderwagens soll dem Fahrzeugführer ein möglichst großer Sichtbereich auf den Untergrund vor der Straßenwalze freigegeben werden. Der in Vorwärtsfahrtrichtung liegende vordere Rand der Abschrägung liegt deshalb relativ tief, so dass die lichttechnischen Einrichtungen, wie zum Beispiel Scheinwerfer und Signalleuchten, auf einer Traverse oberhalb der Abschrägung und in einer vorgeschriebenen Höhe angeordnet sind.

Aus DE 102007040292 A1 ist bekannt, die Rückleuchten und das Kennzeichen eines Kraftfahrzeugs an einem Hohlkörper anzuordnen, der im Rotationsverfahren aus einem thermoplastischen Kunststoff hergestellt ist. Weiter ist es bekannt, bei selbstfahrenden Baumaschinen die lichttechnischen Anlagen in der aus Metall bestehenden Traverse des Vorderwagens anzuordnen.

Der Erfindung liegt die Aufgabe zu Grunde, eine Straßenbaumaschine der eingangs angegebenen Art anzugeben, bei welcher die Montage, Wartung und Reparatur bezüglich der lichttechnischen Einrichtungen vereinfacht ist.

Diese Aufgabe wird dadurch gelöst, dass die lichttechnischen Einrichtungen in einen selbstragenden Hohlkörper aus Kunststoff integriert sind. Für eine Straßenwalze der eingangs genannten Art wird die Aufgabe dadurch gelöst, dass die Traverse aus einem selbstragenden Hohlkörper aus Kunststoff besteht, in welchem die lichttechnischen Einrichtungen integriert sind.

Zu den lichttechnischen Einrichtungen zählen an der Frontseite Fernlicht und Abblendlicht sowie Nebelscheinwerfer. Heckseitig gehören dazu Rückleuchten, Nebelschlussleuchten, Rückfahrscheinwerfer, Schlussleuchten und Bremsleuchten. Sowohl am Heck als auch an der Vorderseite handelt es sich um Fahrtrichtungsanzeiger, Kennzeichenbeleuchtung und selbstleuchtende Nummernschilder. Weiterhin gibt es passive lichttechnische Einrichtungen wie Reflektoren, die zum Beispiel in Form einer Konturmarkierung verwendet werden.

Die Erfindung hat den Vorteil, dass der Hohlkörper und die lichttechnischen Einrichtungen als eine Einheit vormontiert werden können, so dass diese Einheit mit einfachen Mitteln und in kurzer Zeit an der Baumaschine verbaut werden kann. Es handelt sich erfindungsgemäß um ein Modul, dessen Einbau die Gesamtmontagezeit der Maschine verkürzt. Außerdem erlaubt die Ausführung aus Kunststoff vielfältige Möglichkeiten der optischen Gestaltung. Da der Hohlkörper eine gewisse Elastizität aufweist, ist die Gefahr von Beschädigungen, welche die Funktion der lichttechnischen Einrichtungen beeinträchtigt, geringer, weil Stöße u.ä. aufgefangen werden. Ist ein Austausch erforderlich, ist dies auf einfache Weise möglich.

Es ist vorteilhaft, dass der Vorderwagen zwischen den beiden Trägern vor der Fahrerkabine zur Frontseite der Straßenwalze hin eine oberseitige, nach unten abfallende Verkleidung des Vorderwagens aufweist, und dass die Traverse von der Abschrägung beabstandet freitragend zwischen den beiden Trägern angeordnet ist, wobei zwischen der Verkleidung und der Traverse ein freies Sichtfenster gebildet wird. Dadurch ist einerseits das Sichtfeld des Walzenführers auf den Bereich unmittelbar vor der Straßenwalze nicht eingeschränkt, da zwischen der Abschrägung und der Traverse das freie Sichtfenster vorhanden ist. Andererseits befindet sich die Traverse mit den lichttechnischen Anlagen in einer Höhe, in welcher sie nicht mit eventuellen Hindernissen in Kontakt kommt, wie sie häufig auf Baustellen anzutreffen sind.

Eine bevorzugte Weiterbildung der Erfindung besteht darin, dass der Hohlkörper aus einem faserverstärkten Kunststoff oder einem Verbundmaterial besteht, was die Tragfähigkeit und die Widerstandsfähigkeit gegen Beschädigungen erhöht.

Die Herstellung des Hohlkörpers kann auf einfache Weise durch ein Schalengießverfahren erfolgen, bei welchem er aus einer Schmelze gebildet ist, die an einer Formwand der Gießform erstarrt ist. Mit diesem an sich bekannten Verfahren lässt sich die Formgestaltung des Hohlkörpers auf vielfältige Weise umsetzen.

Es erweist sich ferner zum Schutz der lichttechnischen Einrichtungen gegen Umwelteinflüsse und Beschädigungen als vorteilhaft, dass der Hohlkörper Ausnehmungen zur Aufnahme von Scheinwerfern und/oder Signallampen aufweist.

Es kann außerdem vorteilhaft sein, dass der Hohlraum mit Material zur Schwingungsdämpfung oder Aufballastierung gefüllt ist. Alternativ kann der Hohlkörper als Flüssigkeitstank für Wasser oder Treibstoff ausgebildet sein.

Die Montage, Wartung und der Austausch des Hohlkörpers werden dadurch weiter vereinfacht, dass er integrierte elektrische Anschlusselemente für die lichttechnischen Einrichtungen, bevorzugt Steckverbinder, aufweist. Es sind somit zur Herstellung der elektrischen Verbindungen zwischen dem Hohlkörper und der übrigen Baumaschine keine speziellen Kenntnisse oder Werkzeuge erforderlich.

Wenn der Hohlkörper einen größeren Abstand an der Baumaschine überbrücken soll, ist es zweckmäßig, dass die Traverse aus dem Hohlkörper und einer biegesteifen Verstrebung, insbesondere einer metallischen Strebe, gebildet ist. Bei einer Straßenwalze der eingangs genannten Art erweist sich eine derartige metallische Strebe zwischen den beiden Tragelementen und oberhalb der Abschrägung als vorteilhaft.

Nachfolgend wird die Erfindung anhand eines in der Zeichnung dargestellten Ausführungsbeispiels weiter erläutert. Es zeigen schematisch:
- Fig. 1: eine perspektivische Ansicht auf eine Straßenwalze;
- Fig. 2: eine Frontansicht einer Traverse der Straßenwalze;
- Fig. 3: eine Draufsicht auf die Traverse von Fig. 2;
- Fig. 4: einen Querschnitt durch die Traverse von Fig. 2 entlang der Schnittlinie A-A; und
- Fig. 5: einen Querschnitt durch die Traverse von Fig. 3 entlang der Schnittlinie B-B.

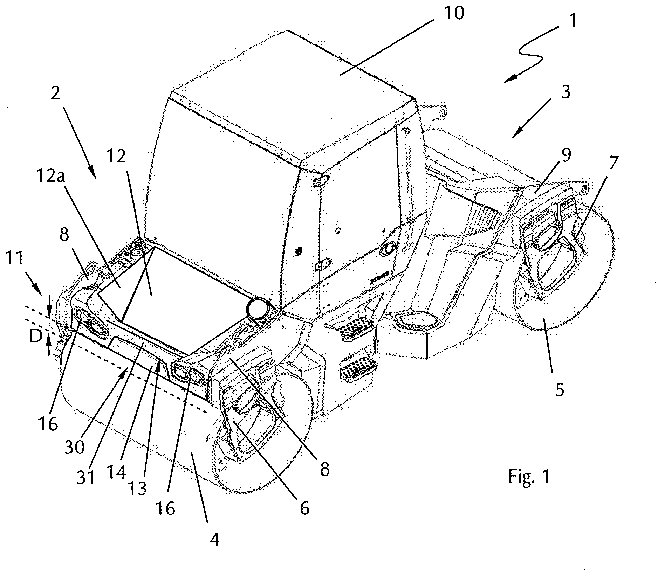

Fig. 1 veranschaulicht eine als Straßenwalze 1 ausgebildete selbstfahrende Baumaschine mit einem Vorderwagen 2 und einem Hinterwagen 3, die über ein Pendel-/Knickgelenk miteinander verbunden sind. Am Vorderwagen 2 ist eine vordere Bandage 4 und am Hinterwagen 3 eine hintere Bandage 5 angeordnet. Die beiden Bandagen sind über vertikale seitliche Stützen 6, 7 am Vorderwagen 2 bzw. Hinterwagen 3 gelagert, die an rahmenseitigen horizontalen Trägern 8 bzw. 9 gehalten sind. Auf dem Vorderwagen 2 befindet sich ferner eine Fahrerkabine 10.

Die Oberseite des Vorderwagens 2 weist zwischen der Fahrerkabine 10 und dem frontseitigen Ende 11 der Straßenwalze 1 großflächig eine zum frontseitigen Ende 11 der Straßenwalze 1 abfallende Verkleidung 12 des Vorderwagens 4 auf. Die Verkleidung 12 erstreckt sich im Wesentlichen über die gesamte Breite des Vorderwagens 2. Seitlich wird sie von den Trägern 8 und sich darin anschließenden Karosserieteilen 12a begrenzt. Bei der Verkleidung 12 handelt es sich um eine im Wesentlichen plane Fläche. Sie kann aus einem Kunststoff- oder Blechteil bestehen. Unter der Verkleidung 12 bzw. können zum Beispiel Tanks, Antriebsmittel u.ä. angeordnet sein (nicht dargestellt). Die Verkleidung 12 endet vor der oberen Scheitellinie der vorderen Bandage 4. Das frontseitige Ende 11 der Verkleidung 12 liegt tiefer als das Ende der Verkleidung 12, welches an die Fahrerkabine 10 anschließt. Die Verkleidung 12 endet vor der Scheitellinie der vorderen Bandage 4. Durch die Verkleidung 12 wird somit eine zur Frontseite abfallende Abschrägung der Oberseite des Vorderwagens 2 bis zur vorderen Bandage 4 geformt. Dadurch ergibt sich ein sich nach unten erweiterndes gutes Sichtfeld für eine Bedienperson von der Fahrerkabine 10 auf den oberen Bereich der vordere Bandage 4 und den vor der Straßenwalze 1 liegenden Bereich.

Zwischen den beiden Trägern 8 ist eine horizontale Traverse 13 angeordnet, die achsparallel zur vorderen Bandage 4 sowie oberhalb der vorderen Bandage 4 verläuft. Die Traverse verläuft ferner oberhalb des tiefliegenden frontseitigen Endes der oberseitigen Verkleidung 12 und vor dem frontseitigen Ende der oberseitigen Verkleidung 12 bzw. Abschrägung. Dadurch wird zwischen der Unterseite der Traverse 13 und dem frontseitigen Ende der Verkleidung 12 ein Sichtfenster 30 gebildet, welches einen freien Blick der Bedienperson zwischen der Traverse 13 und dem frontseitigen Ende der Verkleidung hindurch und unmittelbar über die Scheitellinie der vorderen Bandage 4 auf den vor der Straßenwalze 1 liegenden Bereich ermöglicht.

Die Traverse 13 schließt mit ihren beiden Stirnseiten an die Träger 8 an und ist dort befestigt. Sie überbrückt den Bereich zwischen den beiden Trägern 8 mit einem vorgegebenen Höhenabstand D von der vorderen Bandage 4 und dem frontseitigen Ende der oberseitigen Verkleidung 12, ohne mit der oberseitigen Verkleidung 12 in Verbindung zu stehen.

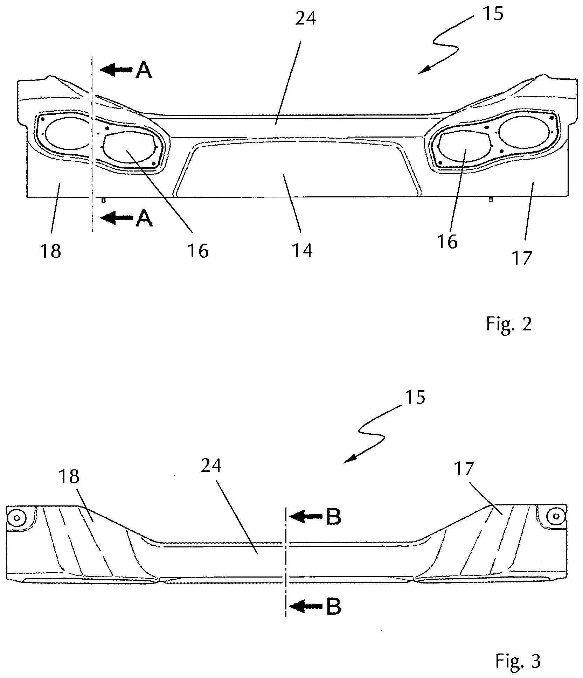

Die Traverse 13 ist als selbsttragender Hohlkörper 15 (Fig. 2) aus Kunststoff ausgebildet, dessen Wände eine geschlossene Außenfläche bilden. In den Hohlkörper 15 sind lichttechnische Einrichtungen integriert, die im dargestellten Beispiel als Frontscheinwerfer 16 ausgebildet sind. Die Außenwände sind lediglich zur Durchführung von Leitungen für die lichttechnischen Einrichtungen durchbrochen und um ggfs. Schraubverbindungen aufzunehmen. Die Wandung des Hohlkörpers 15 ist so geformt, dass Ausbauchungen, Rundungen, Wülste und ähnliches gebildet werden, wie beispielsweise in einem zentralen Bereich 31, der als Bogen geformt ist, mit welchem die Biegesteifigkeit erhöht wird. Außerdem weist sie eine frontseitige plane Fläche 14 auf, auf welcher beispielsweise passive lichttechnische Einrichtungen, wie Reflektoren, angebracht werden können.

Wie die Vorderansicht und die Draufsicht des Hohlkörpers 15 gemäß Fig. 2 und Fig. 3 zeigen, weist er zwei Seitenbereiche 17, 18 zur Aufnahme der Frontscheinwerfer 16 auf. Die Frontscheinwerfer 16 liegen bündig in den Seitenbereichen 17, 18. Da der Hohlkörper 15 aus Kunststoff gegossen ist, kann er in eine optisch ansprechende Form gebracht werden. An den beiden Enden des Hohlkörpers 15 befinden sich Befestigungselemente 32, hier in Form von Gewindeöffnungen, über welche der Hohlkörper 15 an den Trägern 8 verschraubt wird.

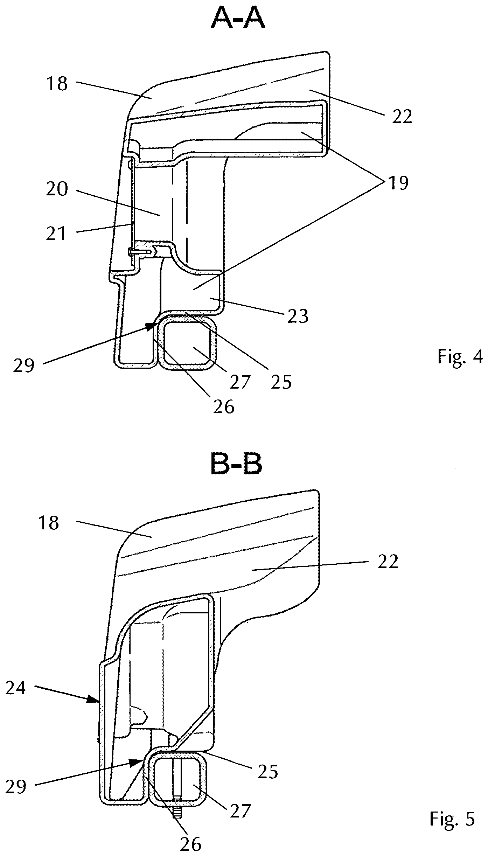

Der in Fig. 4 dargestellte Querschnitt durch den einen Seitenbereich 18 entspricht dem Querschnitt des anderen Seitenbereichs 17. Demnach ist der Hohlkörper 15 in den Seitenbereichen 17, 18 als Hohlring 19 in der Art eines Torus ausgeformt, der einen nach vorn und hinten offenen Aufnahmerum 20 für die Frontscheinwerfer 16 (nicht dargestellt) umgibt. Durch die Wandung dieser Hohlringform ist der Seitenbereich 18 und der Aufnahmeraum 20 gut ausgesteift, so dass er ausreichend stabil zum Tragen der Frontscheinwerfer 16 und zur Befestigung an den Trägern 8, 9 ist. Außerdem ist die Montage der Frontscheinwerfer 16 aufgrund des Zugangs von vorne und hinten in den Aufnahmeraum 20 einfach. In der Fig. 4 ist eine frontseitige Abdeckscheibe 21 des Aufnahmeraums 20 für die Frontscheinwerfer 16 dargestellt, welche am Hohlkörper 15 verschraubt ist und den Aufnahmeraum 20 nach vorne abschließt.

Der Hohlring 19 ist ferner so ausgebildet, dass er in seinem oben liegenden Sektor 22 einen größeren Querschnitt hat, als in seinem unten liegenden Sektor 23. Dadurch weist der Aufnahmeraum 20 nach oben eine breitere Abschirmung gegen äußere Einflüsse auf als nach unten.

Zwischen den beiden Seitenbereichen 17, 18 weist der Hohlkörper 15 einen Mittenteil 24 auf, der die gegenüberliegenden Ringsektoren der Hohlringe 19 in den Seitenbereichen 17, 18 miteinander verbindet.

Fig. 4 und Fig. 5 zeigen ferner, dass der Hohlkörper 15 an seiner Unterseite über seine gesamte Länge eine Hohlkante 29 mit einem horizontalen Schenkel und einem nach unten gerichteten vertikalen Schenkel hat. Auf diese Weise werden über die gesamte Länge des Hohlkörpers 15 eine Schulter mit einer horizontalen Anschlagfläche 25 und einer vertikalen Anschlagfläche 26 gebildet. Die beiden Anschlagflächen bilden einen halboffenen Aufnahmeraum für eine metallische Trägerleiste 27, die horizontal zwischen den Trägern 8, 9 verläuft. Mit der Hohlkante 29 ist der Hohlkörper 15 über seine ganze Länge formschlüssig auf die Trägerleiste 27 gesetzt und dort verschraubt. Der Hohlkörper 15 liegt mit den beiden Anschlagflächen 25, 26 auf und an der Trägerleiste 27, so dass er von unten und in seitlicher Richtung abgestützt wird.

## Patentansprüche

1. Straßenbaumaschine, die als Straßenwalze (1) ausgebildet ist, mit einem Vorderwagen (2) und einem Hinterwagen (3), die über ein Pendel-/Knickgelenk miteinander verbunden sind, wobei auf dem Vorderwagen (2) oder auf dem Hinterwagen eine Fahrerkabine (10) angeordnet ist, wobei der Vorderwagen (2) zwei seitliche Träger (8) aufweist, an welchen zwei Stützen (6) für die vordere Bandage (4) angebracht sind, und wobei zwischen den beiden Trägern (8, 9) eine Traverse (13) verläuft, an welcher lichttechnische Einrichtungen angeordnet sind,
**dadurch gekennzeichnet,**
**dass** die Traverse (13) aus einem selbstragenden Hohlkörper (15) aus Kunststoff besteht, in welchem die lichttechnischen Einrichtungen integriert sind.

2. Straßenbaumaschine nach Anspruch 1 ,
**dadurch gekennzeichnet,**
**dass** der Vorderwagen (2) zwischen den beiden Trägern (8) vor der Fahrerkabine (10) zur Frontseite der Straßenwalze (1) hin eine oberseitige, nach unten abfallende Verkleidung (12) des Vorderwagens (2) aufweist, und dass die Traverse (13) von der Abschrägung (12) beabstandet freitragend zwischen den beiden Trägern (8) angeordnet ist, wobei zwischen der Verkleidung (12) und der Traverse (13) ein freies Sichtfenster (30) gebildet wird.

3. Straßenbaumaschine nach einem der vorhergehenden Ansprüche ,
**dadurch gekennzeichnet,**
**dass** der Hohlkörper (15) aus einem faserverstärkten Kunststoff besteht.

4. Straßenbaumaschine nach einem der vorhergehenden Ansprüche, '
**dadurch gekennzeichnet,**
**dass** der Hohlkörper (15) durch ein Schalengießverfahren hergestellt ist, bei welchem der Hohlkörper (15) aus einer an einer Formwand erstarrten Schmelze gebildet ist.

5. Straßenbaumaschine nach einem der vorhergehenden Ansprüche,
**dadurch gekennzeichnet,**
**dass** der Hohlkörper (15) Ausnehmungen zur Aufnahme von Scheinwerfern und/oder Signallampen aufweist.

6. Straßenbaumaschine nach einem der vorhergehenden Ansprüche,
**dadurch gekennzeichnet,**
**dass** der Hohlkörper (15) mit Material zur Schwingungsdämpfung oder Aufballastierung gefüllt ist.

7. Straßenbaumaschine nach einem der vorhergehenden Ansprüche,
**dadurch gekennzeichnet,**
**dass** der Hohlkörper (15) als Flüssigkeitstank für Wasser oder Treibstoff ausgebildet ist.

8. Straßenbaumaschine nach einem der vorhergehenden Ansprüche,
**dadurch gekennzeichnet,**
**dass** der Hohlkörper (15) integrierte elektrische Anschlusselemente aufweist.

9. Straßenbaumaschine nach einem der vorhergehenden Ansprüche,
**dadurch gekennzeichnet,**
**dass** die Traverse (13) aus dem Hohlkörper (15) und einer metallischen Trägerleiste (27) gebildet ist, die zwischen den beiden Trägern (8, 9) angeordnet ist.

## Claims

1. A road construction machine, configured as a road roller (1), with a front carriage (2) and a rear carriage (3) connected to one another via a pendulum/articulated joint, wherein a driver cab (10) is arranged on said front carriage (2) or on said rear carriage, wherein the front carriage (2) has two lateral structural members (8) to which two supports (6) for the front drum (4) are attached, and wherein a crossmember (13) having lighting devices arranged thereon extends between the two structural members (8, 9),
**characterized in that**
the crossmember (13) consists of a self-supporting hollow body (15) made of plastic in which the lighting devices are integrated.

2. The road construction machine according to claim 1,
**characterized in that**
the front carriage (2) has a front carriage (2) top side covering (12) descending, between the two structural members (8) in front of the driver cab (10), towards the front side of the road roller (1), and that the crossmember (13) is suspended between the two structural members (8) at a distance from the slope (12) thereby forming a free observation window (30) between the covering (12) and the crossmember (13).

3. The road construction machine according to any one of the preceding claims,
**characterized in that**
the hollow body (15) consists of a fiber-reinforced plastic material.

4. The road construction machine according to any one of the preceding claims,
**characterized in that**
the hollow body (15) is fabricated through a mold casting process in which the hollow body (15) is formed of a melt solidified at a mold wall.

5. The road construction machine according to any one of the preceding claims,
**characterized in that**
the hollow body (15) has openings for accommodating headlights and/or signal lamps.

6. The road construction machine according to any one of the preceding claims, **characterized in that**
the hollow body (15) is filled with material for vibration damping or ballasting.

7. The road construction machine according to any one of the preceding claims,
**characterized in that**
the hollow body (15) is configured as a liquid tank for water or fuel.

8. The road construction machine according to any one of the preceding claims,
**characterized in that**
the hollow body (15) has integrated electrical connecting elements.

9. The road construction machine according to any one of the preceding claims,
**characterized in that**
the crossmember (13) is formed by the hollow body (15) and a metallic support rail (27) arranged between the two structural members (8, 9).

## Revendications

1. Engin de construction de routes, prenant la forme d'un rouleau compacteur (1), avec un train avant (2) et un train arrière (3) reliés l'un à l'autre par l'intermédiaire d'une articulation pendulaire/articulée, dans lequel une cabine conducteur (10) est installée sur ledit train avant (2) ou sur ledit train arrière, dans lequel le train avant (2) possède deux éléments structurels latéraux (8) auxquels sont fixés deux supports (6) pour le cylindre avant (4), et dans lequel une traverse (13), sur laquelle sont disposés des dispositifs d'éclairage, s'étend entre les deux éléments structurels (8, 9),
***caractérisé en ce que***
la traverse (13) est constituée d'un corps creux autoportant (15) fait de matière plastique dans lequel sont intégrés les dispositifs d'éclairage.

2. Engin de construction de routes selon la revendication 1,
***caractérisé en ce que***
le train avant (2) possède, entre les deux éléments structurels (8), devant la cabine conducteur (10), un parement supérieur (12) de train avant (2) incliné en direction de la face avant du rouleau compacteur (1), et ***en ce que*** la traverse (13) est suspendue entre les deux éléments structurels (8) à une certaine distance du chanfrein (12), formant ainsi une fenêtre d'observation dégagée (30) entre le parement (12) et la traverse (13).

3. Engin de construction de routes selon l'une quelconque des revendications précédentes,
***caractérisé en ce que***
le corps creux (15) est constitué de matière plastique renforcée par des fibres.

4. Engin de construction de routes selon l'une quelconque des revendications précédentes, ***caractérisé en ce que***
le corps creux (15) est fabriqué par un procédé de moulage dans lequel le corps creux (15) est formé à partir d'une masse fondue solidifiée sur une paroi du moule.

5. Engin de construction de routes selon l'une quelconque des revendications précédentes,
***caractérisé en ce que***
le corps creux (15) comporte des ouvertures destinées à recevoir des phares et/ou des voyants lumineux.

6. Engin de construction de routes selon l'une quelconque des revendications précédentes,
***caractérisé en ce que***
le corps creux (15) est rempli de matériau d'amortissement des vibrations ou de lestage.

7. Engin de construction de routes selon l'une quelconque des revendications précédentes,
***caractérisé en ce que***
le corps creux (15) est configuré en réservoir de liquide pour de l'eau ou du carburant.

8. Engin de construction de routes selon l'une quelconque des revendications précédentes,
***caractérisé en ce que***
le corps creux (15) comprend des élément de raccordement électrique intégrés.

9. Engin de construction de routes selon l'une quelconque des revendications précédentes,
***caractérisé en ce que***
la traverse (13) est formée par le corps creux (15) et un rail métallique de support (27) disposé entre les deux éléments structurels (8, 9).
